# EUROPÄISCHE PATENTSCHRIFT

(11) **EP 1 532 706 B1**
(45) Veröffentlichungstag und Bekanntmachung des Hinweises auf die Patenterteilung: **30.03.2011**
(21) Anmeldenummer: 03790788.8
(22) Anmeldetag: 08.07.2003
(51) Int. Cl.: H01M 8/02, H01M 8/24

(54) **BRENNSTOFFZELLEN-STACK**
FUEL CELL STACK
EMPILEMENT DE CELLULES ELECTROCHIMIQUES

(30) Priorität: 24.08.2002 DE 10238859
(43) Veröffentlichungstag der Anmeldung: 25.05.2005
(73) Patentinhaber: Bayerische Motoren Werke Aktiengesellschaft, 80809 München (DE)
(72) Erfinder: DANZER, Maximilian, 85298 Fernhag (DE); WETZEL, Franz-Josef, 82216 Gernlinden (DE); HOEFLER, Thomas, 81247 München (DE); FINKENWIRTH, Olav, 80339 München (DE); KUHN, Bernd, 70771 Leinfelden-Echterdingen (DE); STOERMER, Andreas, Oswald, 83104 Tuntenhausen (DE); YAN, Xiaofeng, 70199 Stuttgart (DE)
(86) Internationale Anmeldenummer: PCT/EP2003/007308
(87) Internationale Veröffentlichungsnummer: WO 2004/021488

(56) Entgegenhaltungen:
- EP-A- 0 454 095
- EP-A1- 0 387 643
- WO-A-02/33771
- DE-A- 10 003 528
- DE-A- 10 012 621
- US-A- 5 770 327
- PATENT ABSTRACTS OF JAPAN vol. 013, no. 295 (E-783), 7. Juli 1989 (1989-07-07) -& JP 01 076671 A (MITSUBISHI HEAVY IND LTD), 22. März 1989 (1989-03-22)

## Beschreibung

Die Erfindung betrifft eine Brennstoffzellen-Einheit, die aus mehreren Einzel-Brennstoffzellen zusammengebaut ist, von denen jede neben einer Kathoden-Elektrolyt-Anoden-Einheit eine ein Brenngas über deren erste Elektroden-Oberfläche verteilende und die Kathoden-Elektrolyt-Anoden-Einheit tragende Struktur aufweist, und die weiterhin eine einen Hohlraum aufweisende und durch diesen das Brenngas verteilende Kassette enthält. Zum technischen Umfeld wird beispielshalber auf die DE 43 40 153 C1 sowie auf JP 01 076671 A (Abstract und Abbildungen) verwiesen.

Bekanntermaßen lässt sich mit Brennstoffzellen, bspw. Festoxid-Brennstoffzellen (Solid Oxid Fuel Cell, SOFC) elektrischer Strom erzeugen, wobei der in einer Einzel-Brennstoffstelle gewinnbare Betrag an elektrischer Spannung zwar von den verwendeten Materialien abhängig, dabei jedoch stets relativ gering ist. Daher ist es erforderlich, mehrere Einzel-Brennstoffzellen elektrisch in Reihe zu schalten, um eine für übliche Anwendungen geeignete elektrische Spannung erzeugen zu können. Insbesondere für die Großserienfertigung von Brennstoffzellen-Stacks spielt dabei die Möglichkeit einer wirtschaftlichen Herstellung eine wesentliche Rolle. Insbesondere sollen dabei Einzel-Brennstoffzellen relativ einfach zu Stapeln zusammengesetzt werden können.

In JP 01 076671 A ist ein Zusammenbau von zwei Brennstoffzellen gezeigt, die nebeneinander auf einer quaderförmigen Struktur angeordneten sind, die Durchtrittsöffnungen zu jeweils einem Substrat aufweist, welches die Kathoden-Elektrolyt-Anoden-Einheit einer Brennstoffzelle trägt.

In der eingangs genannten DE 43 40 153 C1 ist eine Brennstoff-Zelle gezeigt, bei der neben einer eigenständig vorgefertigten Kathoden-Elektrolyt-Anoden-Einheit eine eigenständige Zwischenlage zwischen den Elektroden und den (dem Fachmann bekannten) Bipolarplatten oder Trennplatten vorgesehen ist. Diese eigenständige Zwischenlage ist als ein elektrisch leitendes, elastisches und gasdurchlässiges Kontaktkissen mit einer verformbaren Oberflächenstruktur ausgebildet, wobei die sog. Kissenfüllung ein hochelastisches Metallgewebe und der sog. Kissenbezug bspw. ein perforiertes Blech sein kann. Der Zweck dieses sog. Kontaktkissens besteht darin, einen optimalen elektrischen Kontakt der Elektroden zu erreichen, wobei gleichzeitig eine weniger exakte Oberflächengüte bspw. der Anoden und Kathoden in Kauf genommen werden kann, ohne dass es zu Nachteilen in der (elektrischen) Kontaktierung innerhalb der Brennstoff-Zelle oder eines aus mehreren Einzel-Brennstoff-Zellen aufgebauten Brennnstoffzellen-Stacks oder -Stapels kommt.

Die Handhabung der einzelnen Elemente dieser bekannten Brennstoffzellen im Rahmen eines Zusammenbaus eines Brennstoffzellen-Stapels ist jedoch äußerst aufwändig, weshalb hier nun ein Brennstoffzellen-Stack aufgezeigt werden soll, der erheblich einfacher zusammengesetzt werden kann (= Aufgabe der vorliegenden Erfindung).
Die Lösung dieser Aufgabe ist dadurch gekennzeichnet, dass die Brennstoffzellen-Einheit als Stack ausgebildet und aus mehreren übereinander gestapelten Einzel-Brennstoffzellen zusammengebaut ist, deren die Kathoden-Elektrolyt-Anoden-Einheit tragende Struktur eine perforierte mit Löchern oder Durchtrittsöffnungen versehene Folie ist, die als sog. Oberschale mit einer sog. Unterschale durch eine gasdichte stoffschlüssige Verbindung, insbesondere Schweißverbindung, zu der Kassette zusammengesetzt ist, durch deren Hohlraum das Brenngas zur ersten Elektrode gelangt, und dass jede Kassette auf ihrer der Kathoden-Elektrolyt-Anoden-Einheit gegenüberliegenden Seite mit einer Gestaltung zum Verteilen von Luftsauerstoff über der Oberfläche der zweiten Elektrode einer benachbarten Kassette versehen ist, so dass der Stack durch mehrere übereinander angeordnete Kassetten gebildet ist, zwischen denen sich jeweils eine Kathoden-Elektrolyt-Anoden-Einheit sowie die sog. Gestaltung zum Verteilen von Luftsauerstoff über der Oberfläche der zweiten Elektrode befindet. Vorteilhafte Aus- und Weiterbildungen sind Inhalt der Unteransprüche.

Erfindungsgemäß stellt jede einzelne Brennstoff-Zelle des Brennstoffzellen-Stapels eine komplette für sich handhabbare Einheit dar. Diese Einheit enthält neben der Brenngas-Zufuhr (und Abfuhr) über die erfindungsgemäße Kassette auch eine geeignete "weitere" Struktur zum Verteilen des Luft-Sauerstoffs. Während dabei die Zufuhr des Brenngases im Hinblick auf Dichtigkeitsanforderungen über bzw. durch die jeweilige Kassette erfolgt und die zugehörige mit dem Brenngas in Kontakt zu bringende erste Elektrode der Kathoden-Elektrolyt-Anoden-Einheit aus dem gleichen Grunde auch direkt auf der jeweiligen Kassette vorgesehen ist, ist bezüglich der Luftzufuhr oder Sauerstoff-Zufuhr zur anderen, zweiten Elektrode der Kathoden-Elektrolyt-Anoden-Einheit an der jeweiligen Kassette lediglich eine geeignete "weitere" Struktur zum Verteilen des Luft-Sauerstoffs vorgesehen, während diese andere, zweite Elektrode ein Bestandteil einer anderen, nämlich der benachbarten Kassette bzw. der auf dieser vorgesehenen Kathoden-Elektrolyt-Anoden-Einheit ist.

Beispielsweise befinde sich auf der Oberseite einer ersten Kassette eine Kathoden-Elektrolyt-Anoden-Einheit (CEA abgekürzt), deren Anode direkt an der besagten Folie der Kassette anliege. Auf der Unterseite dieser Kassette befinde sich dann die besagte Gestaltung zum Verteilen von Luft-Sauerstoff über der Kathode der unterhalb dieser Kassette angeordneten zweiten Kassette, deren Kathoden-Elektrolyt-Anoden-Einheit (CEA) eben der Unterseite der ersten Kassette zugewandt ist. Nur über diese beiden Kassetten betrachtet ergibt sich dann von oben nach unten betrachtet der folgende Aufbau:
(CEA der 1.Kassette) - (Folie und weitere Struktur der 1.Kassette) - (Gestaltung an der 1.Kassette zum Verteilen von Luft-Sauerstoff für die 2.Kassette) - (CEA der 2.Kassette) - (Folie und weitere Struktur der 2.Kassette) - (Gestaltung an der 2.Kassette zum Verteilen von Luft-Sauerstoff an der 3.Kassette). Diese Reihe lässt sich beliebig weiter fortsetzen.

Die sog. perforierte Folie, die ein Bestandteil der erfindungsgemäßen Kassette ist, und die sowohl eine Kathoden-Elektrolyt-Anoden-Einheit trägt als auch für die Verteilung des Brenngases über der Oberfläche der ersten Elektrode dieser Einheit zuständig ist, besteht dabei bevorzugt aus einem metallischen Werkstoff, ebenso wie die sog. weitere Struktur und somit - mit Ausnahme der Kathoden-Elektrolyt-Anoden-Einheit die gesamte Kassette, und zwar aus folgendem Grund:

Wenn nämlich für das die Kathoden-Elektrolyt-Anoden-Einheit einer Brennstoffzelle tragende sog. Substrat oder dgl.- also hier die besagte Folie - ein anderer Werkstoff als für die übliche, dem Fachmann für Brennstoffzellen bekannte Bipolarplatte verwendet wird, so können diese beide Komponenten nahezu nicht oder allenfalls schlecht miteinander verschweißt werden, was jedoch für eine industrielle Großserienfertigung eine angestrebte Verbindungstechnik darstellt. Die bei der Verwendung unterschiedlicher Werkstoffe voneinander abweichenden thermischen Ausdehnungskoeffizienten führen ferner bei umgebungsbedingten und insbesondere bei betriebsbedingten Temperaturveränderungen innerhalb der Brennstoffzelle zu thermomechanischen Spannungen, und zwar jeweils zwischen dem sog. Träger-Substrat (d.h. der besagten Folie) und der darauf liegenden Anode, aber auch innerhalb der Kathoden-Elektrolyt-Anoden-Einheit zwischen der Anode und der Elektrolytschicht sowie zwischen der Elektrolytschicht und der Kathode. Die Brennstoffzelle wird dadurch Belastungen ausgesetzt, die ggf. deren Dauerhaltbarkeit reduzieren, und die folglich vermieden werden sollten. Insbesondere wenn die vorzugsweise ferritischen Bipolarplatten mit bspw. nickelhaltigen Substraten verschweißt werden, kann der Ferrit des Bipolarplatten-Materials entlang der Schweißnaht durch Umschmelzungen/Umlegierungsprozesse stark austenitisiert werden. Die dadurch im Umfeld der keramischen Kathoden-Elektrolyt-Anoden-Einheit stark steigende Wärmedehnung kann auch bei ausdehnungsspezifisch gut an die Anode angepasstem Ferrit zum Abplatzen von Bestandteilen der Kathoden-Elektrolyt-Anoden-Einheit und damit zu einem Versagen der keramischen Brennstoffzellen führen.

Dieser Problematik kann nun dadurch begegnet werden, dass die besagte perforierte Folie bzw. ein entsprechendes Blech oder Band aus einem geeigneten metallischen Werkstoff besteht und mit einer bzw. der sog. weiteren Struktur zu der einen Hohlraum aufweisenden sog. Kassette zusammengesetzt ist, wobei diese weitere Struktur ebenfalls aus einem metallischen Werkstoff besteht, so dass dieses zusammengesetzte Gebilde letztlich eine bzw. die Bipolarplatte der Brennstoff-Einzelzelle bilden kann, auf der, genauer auf deren perforierte Folie, sich die Kathoden-Elektrolyt-Anoden-Einheit befindet.

Über den besagten Hohlraum dieser sog. Kassette kann dann das Brenngas zur Elektrode (bspw. Anode) hin bzw. von dieser weggeführt werden. Bei dieser Kassette handelt sich also um einen Hohlkörper, der bevorzugt aus einer Oberschale und einer Unterschale besteht, welche bevorzugt entlang ihrer Ränder miteinander verschweißt, allgemein stoffschlüssig verbunden sind, um eine ausreichende Gasdichtheit in diesem Bereich zu gewährleisten.

Wenn nun mehrere übereinander angeordnete Kassetten, die auf ihrer sog. Oberschale jeweils mit einer Kathoden-Elektrolyt-Anoden-Einheit versehen sind, und wobei die zusammengefügte Oberschale und Unterschale jeweils als Bipolarplatte fungieren, innerhalb derer das Brenngas zur Anodenschicht geführt werden kann, zu einem grundsätzlich bekannten Brennstoffzellen-Stack zusammengesetzt werden, so muss nun noch dafür Sorge getragen werden, dass zwischen der Außenseite der Unterschale einer ersten Kassette und der obenliegenden Elektrodenschicht der im Brennstoffzellen-Stack unter dieser ersten Kassette liegenden zweiten Kassette ein Gasverteilungsraum oder Strömungsraum für Umgebungsluft bzw. den Luft-Sauerstoff vorliegt.

In diesem Sinne kann als geeignete sog. Gestaltung zum Verteilen von Luft-Sauerstoff die Außenseite der Unterschale mit einer entsprechenden, einen solchen Strömungsraum schaffenden Prägestruktur versehen werden, die also quasi eine Kanalstruktur bildet. Die entsprechenden Einprägungen können bspw. in und quer zur Strömungsrichtung eine Mäanderstruktur, unterbrochene und seitlich versetzte Kanäle, eine Einlaufzone u.v.m. aufweisen. Alternativ oder zusätzlich kann ein auf diese Wand aufgebrachtes metallisches Drahtgewirk oder dgl. diese geeignete Gestaltung zum Verteilen von Luftsauerstoff bilden. Dabei steht der Begriff "Drahtgewirk" allgemein für ein Gestrick oder Gewebe oder Vlies und vieles mehr, was sich durch einen vergleichbaren Aufbau charakterisieren lässt, wobei dieses Drahtgewirk bevorzugt mit der sog. Unterschale der Kassette verschweißt oder verlötet ist. Hergestellt werden sollte dabei auch eine gut elektrisch leitende Verbindung zwischen der Kassette und dem sog. Gewirk, um die ohmschen Widerstände im Brennstoffzellen-Stack zu minimieren.

Nur der Vollständigkeit halber sei darauf hingewiesen, dass ein Verbund zwischen der perforierten Folie und der von dieser getragenen Kathoden-Elektrolyt-Anoden-Einheit in unterschiedlicher Weise ausgebildet sein kann. In einer bevorzugten Ausführungsform sind die einzelnen Schichten dieser Kathoden-Elektrolyt-Anoden-Einheit (CEA) durch ein thermisches Pulver-Sprühverfahren auf die besagte perforierte Folie aufgebracht, und zwar nacheinander, aufeinanderfolgend. Was dabei den Ablauf der einzelnen Bearbeitungsschritte sowie die erfindungsgemäße Kassette in ihrer Gesamtheit zusammen mit der perforierten Folie betrifft, so sind zwei grundsätzliche Ausführungsformen möglich.

Nach einer ersten Variante kann in eine sog. Oberschale der Kassette, die einen rechteckigen, quadratischen, runden oder beliebig ovalen Ausschnitt aufweisen kann, die bevorzugt vorher perforierte Folie als Substrat eingeschweißt werden. Dazu wird eine entsprechende Folie, ein Band oder ein Blech zunächst perforiert, d.h. mit geeigneten Löchern oder Durchtrittsöffnungen versehen, was grundsätzlich entweder in Bandform oder Stück für Stück erfolgen kann. Danach wird die Folie in einen entsprechenden Ausschnitt der Oberschale einer herzustellenden Brennstoffzellen-Kassette eingeschweißt. Eine solche Schweißnaht ersetzt dabei die üblicherweise bei einer planaren Festoxid-Brennstoffzelle unabdingbare Eindichtung der Brennstoffzelle in deren Bipolarplatte mittels Glaslot oder sonstigem keramischem oder metallischem Klebstoff.

Anschließend kann die Kathoden-Elektrolyt-Anoden-Einheit nach einem vorteilhaften Herstellprozess mittels eines thermischen Pulver-Sprühverfahrens direkt auf die eingeschweißte perforierte Metallfolie gesprüht werden. In Frage kommt hierfür bspw. ein Vakuum-Plasmasprühen (auch Vakuum-Plasmaspritzen genannt), atmosphärisches Plasmaspritzen, Flammspritzen, oder andere. Bevorzugt wird nun zunächst die Anode unter Nutzung einer Sprühmaske bis knapp zur Schweißnaht zwischen Folie und Oberschale aufgesprüht. Anschließend kann mit einer größeren Maske die Elektrolytschicht auf die Anodenschicht aufgetragen werden, wodurch diese gasdicht gemacht sowie elektrisch isoliert und zusätzlich die Schweißnaht und ein kleiner Rand des darum befindlichen Bleches im gleichen Arbeitsgang mittels Elektrolytmaterial sprühtechnisch abgedichtet werden kann. Darauf kann die Kathodenschicht mittels einer Maske sprühtechnisch exakt auf die Fläche der Anode appliziert werden.

Nach einer zweiten Ausführungsform kann die Oberschale direkt als Träger-Substrat für die aufzusprühende Anodenschicht dienen. Sie weist in diesem Fall keine Aussparung auf. Stattdessen wird im Bereich der später durch ein thermisches Pulver-Sprühverfahren zu applizierenden Anode die Oberschale selbst perforiert, so dass die Kassetten-Oberschale selbst also die erfindungsgemäße perforierte Folie ist. Die Perforation kann dabei entweder vor oder nach dem Verschweißen der beiden Kassettenhälften, d.h. der genannten Oberschale mit der genannten Unterschale, erfolgen. Die Applizierung der Kathoden-Elektrolyt-Anoden-Einheit erfolgt dann wie für die erste Ausführungsform beschrieben. Die Abdichtfunktion des Elektrolyten beschränkt sich dabei jedoch auf die Abdichtung der porösen Anodenschicht.

Im übrigen kann in den Hohlraum einer geschilderten sog. Brennstoff-Zellen-Kassette, von welcher dann mehrere zu einem sog. Brennstoffzellen-Stapel oder -Stack zusammengesetzt werden, insbesondere zur Verbesserung der Brenngas-Verteilung eine geeignete Grobstruktur eingebracht werden. Hierbei kann es sich um ein Drahtgestrick, ein Drahtgeflecht oder Drahtgewebe oder um ein Vlies handeln, was allgemein als Draht-Gewirk bezeichnet werden kann. Dieses Gewirk kann dabei auch zur mechanischen Abstützung der Oberschale auf der Unterschale sowie zur Leitung von elektrischem Strom dienen.

Eine besondere Problematik an Brennstoffzellen-Stacks ist es, dass unter den einander benachbarten Brennstoffzellen dieses Stapels ein ausreichender elektrischer Kontakt gewährleistet sein muss, um die ohmschen Verluste im Stack so gering als möglich zu halten. Eine besondere Problematik besteht hierbei darin, dass der Brennstoffzellen-Stapel großen Temperaturschwankungen unterworfen ist, nämlich zwischen der maximalen Betriebstemperatur einerseits einer Stillstands-Temperatur unter Umgebungsbedingungen andererseits. Unvermeidbare Wärmedehnungen sind hiervon die Folge, die geeignet kompensiert werden müssen, will man unter allen Bedingungen einen ausreichenden elektrischen Kontakt zwischen den einzelnen übereinanderliegenden Einzel-Brennstoffzellen eines Brennstoffzellen-Stacks sicherstellen. Hierzu können die in einem geeigneten Gehäuse übereinander angeordneten Einzel-Brennstoffzellen bspw. mittels eines Federelementes gegeneinander verspannt werden, was jedoch teilweise zu hohen mechanischen Belastungen der keramischen Elektroden-Schichten führen kann.

Demgegenüber wesentlich günstiger ist es, wenn - wie weiterhin vorgeschlagen wird - der in einem Gehäuse oder dgl. angeordnete Stapel von Einzel-Brennstoffzellen zumindest eine sog. Verspann-Kassette enthält, deren Wandungen undurchlässig ausgebildet sind und die mit einem sich bei Erwärmung relativ stark ausdehnenden Material befüllt ist. Bevorzugt ist dabei diese sog. Verspann-Kassette hinsichtlich ihrer Abmessungen den anderen, jeweils einer Kathoden-Elektrolyt-Anoden-Einheit zugeordneten Kassetten ähnlich, wobei die Verspann-Kassette selbst selbstverständlich auch stromleitend sein sollte, um den gewünschten Stromfluss innerhalb des Stacks nicht zu unterbrechen.

Mittels einer derartigen Verspann-Kassette, die sich aufgrund der besagten geometrischen Ähnlichkeit optimal in einen Stapel erfindungsgemäßer Einzel-Brennstoffzellen-Kassetten einfügt, ergibt sich quasi eine selbsttätige Verspannung innerhalb des Brennstoffzellen-Stacks abhängig von der jeweils vorliegenden Temperatur. Beispielsweise seien bei Umgebungstemperaturen die Einzel-Brennstoffzellen mit ihren Kassetten inclusive der sich im Stapel befindenden Verspann-Kassette oder (ggf. mehreren) Verspann-Kassetten ausreichend gegeneinander verspannt, um einen bestmöglichen Stromfluss innerhalb des Stack zu gewährleisten. Dehnt sich nun bei Inbetriebnahme der Brennstoffzelle aufgrund der dann erfolgenden intensiven Temperaturerhöhung das die einzelnen Kassetten aufnehmende Gehäuse oder dgl., das selbst gegenüber den Kassetten elektrisch isoliert sein sollte, aus, so kann sich (bei geeigneter Auslegung) im wesentlichen in gleichem Maße auch die sog. Verspann-Kassette ausdehnen, so dass unabhängig von den auftretenden Wärmedehnungen die Vorspannung im Brennstoffzellen-Stack erhalten bleibt. Die entsprechende Ausdehnung der Verspann-Kassette(n) erfolgt dabei selbsttätig in Abhängigkeit von der jeweiligen Temperatur-Erhöhung, da bzw. wenn diese Kassette mit einem geeigneten, sich bei Erwärmung (bevorzugt relativ stark) ausdehnenden Material befüllt ist. Bspw. kann es sich bei diesem Material um Wasser handeln, daneben sind aber auch eine Vielzahl anderer geeigneter Materialien auffindbar.

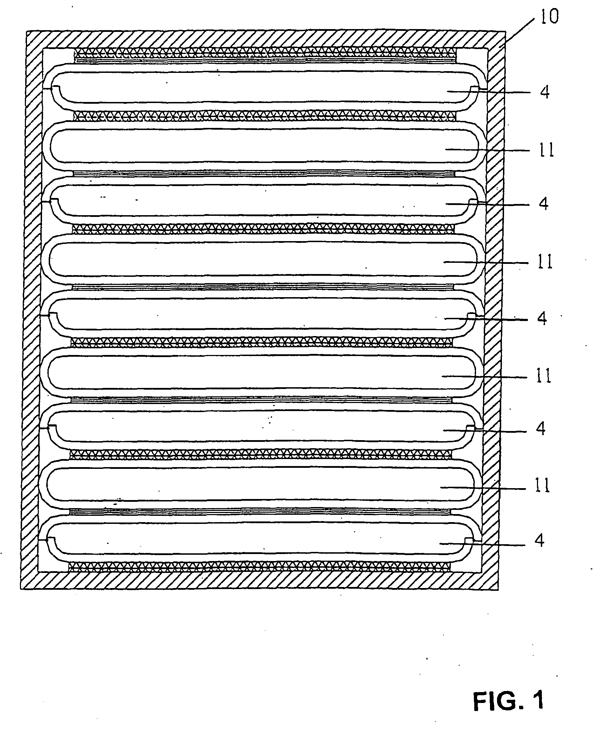

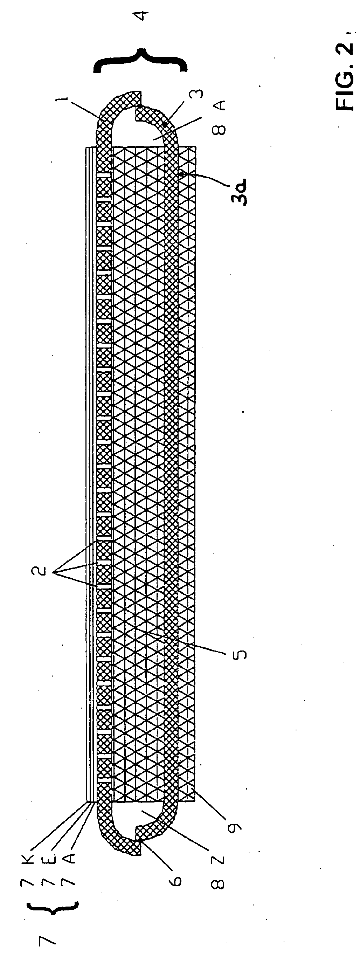

Beigefügt sind zwei Prinzipskizzen, aus denen die vorliegende Erfindung weiter hervorgeht, wobei **Figur 1** stark auf das wesentliche abstrahiert einen Brennstoffzellen-Stack mit einer soeben geschilderten Verspann-Kassette zeigt, während in **Figur 2** ein Schnitt durch eine Einzel-Brennstoffzelle in Form einer erfindungsgemäßen Kassette dargestellt ist.

Zunächst auf **Figur 1** Bezug nehmend ist mit der Bezugsziffer 10 ein im wesentlich allseitig geschlossenes Gehäuse bezeichnet, in dem mehrere sog. Kassetten 4 übereinander gestapelt angeordnet bzw. eingespannt sind, die jeweils für sich eine Einzel-Brennstoffzelle bilden. In diesen Stapel von Kassetten 4 integriert sind hier mehrere sog. Verspann-Kassetten 11, bei denen es sich analog den - im weiteren noch näher erläuterten Kassetten 4 - um einen Hohlraum bildende Körper handelt, wobei der Hohlraum jeder Verspann-Kassette 11 mit einem geeigneten sich bei Temperaturerhöhung relativ stark ausdehnenden Material ausgefüllt ist. Wie im dieser Figurenbeschreibung vorangehenden Absatz beschrieben wurde, gewährleisten diese Verspann-Kassetten 11, dass die hier in Vertikalrichtung übereinander angeordneten und folglich auch in Vertikalrichtung gegeneinander verspannten Kassetten 4, 11 auch bei extremen Temperaturänderungen im Brennstoffzellen-Stack gegeneinander verspannt bleiben. Selbstverständlich sind an einem Brennstoffzellen-Stack eine Vielzahl weiterer Elemente erforderlich, wie Zu- und Abfuhrleitungen für das Brenngas sowie für die den benötigten Sauerstoff liefernde Umgebungsluft, ferner diverse elektrische Anschlüsse und einiges mehr, jedoch sind diese Details für das Wesen der vorliegenden Erfindung unerheblich. Darauf hingewiesen sei lediglich noch, dass das Gehäuse 10 selbstverständlich keinen elektrischen Kurzschluss zwischen den einzelnen Kassetten 4, 11 herstellen darf und aus diesem Grunde entweder aus einem elektrisch isolierendem Nicht-Leiter-Material gefertigt oder zumindest innenseitig mit einer geeigneten elektrischen Isolationsschicht versehen sein sollte.

Im weitern auf **Figur 2** Bezug nehmend, ist hierin eine Einzel-Brennstoffzelle in Form einer erfindungsgemäßen Kassette ebenfalls vereinfacht dargestellt. Dabei ist mit der Bezugsziffer 1 eine metallische Folie bezeichnet, die gleichzeitig die sog. Oberschale der sog. Kassette 4 darstellt. Wie ersichtlich ist diese sich selbstverständlich über ein gewisses Längenmass senkrecht zur Zeichenebene erstreckende Folie 1 perforiert, d.h. mit Löchern 2 oder Durchtrittsöffnungen versehen.

Zusammen mit einer als Unterschale 3 bezeichneten sog. weiteren Struktur (ebenfalls mit der Bezugsziffer 3 bezeichnet) bildet die Oberschale 1 oder Folie 1 die genannte Kassette 4, die einen Hohlraum einschließt. In einen Teilbereich dieses Hohlraumes ist ein metallisches Drahtgewirk 5 oder dgl. eingebracht, und zwar im wesentlichen im Überdeckungsbereich mit den Löchern 2. In ihren Randbereichen sind dabei die Oberschale 1 und die Unterschale 3 miteinander verschweißt, d.h. über eine rundum verlaufende Schweißnaht 6 stoffschlüssig und somit gasdicht miteinander verbunden.

Im wesentlichen im Überdeckungsbereich mit dem Drahtgewirk 5 ist auf der diesem abgewandten Seite der Folie 1 bzw. Oberschale 1 eine Kathoden-Elektrolyt-Anoden-Einheit 7 aufgetragen, wobei die an der Folie 1 anliegende Schicht die Anodenschicht 7A ist. Diese wird im Herstellungsprozess einer Kassette 4 bzw. Einzel-Brennstoff-Zelle als erste Schicht mittels eines thermischen Pulver-Sprühverfahrens (bevorzugt durch Vakuumplasmaspritzen) aufgetragen. Hierauf wird dann - wie bereits erläutert wurde - eine Elektrolytschicht 7E und auf diese eine Kathodenschicht 7K aufgebracht.

In den Hohlraum der Kassette 4 wird das für die Brennstoffzelle bzw. für den darin erfolgenden elektrochemischen Umwandlungsprozess benötigte Brenngas zugeführt, wobei die Brenngas-Zufuhr 8Z im in der Zeichnung linksseitigen Bereich des Hohlraums liege, während die Brenngas-Abfuhr 8A im rechtsseitigen Abschnitt des Kassetten-Hohlraums liege. Durch das Drahtgewirk 5 wird dieses Brenngas dabei geeignet auf die einzelnen Löcher 2 verteilt, so dass es dann durch diese zur Anodenschicht 7A gelangen und dort entsprechend reagieren kann. Die Abfuhr der Reaktionsprodukte erfolgt ebenfalls über Löcher 2 zur Brenngas-Abfuhr 8A hin.

Damit an der Kathoden-Elektrolyt-Anoden-Einheit 7 die gewünschte elektrochemische Reaktion ablaufen kann, ist es (bekanntermaßen) zusätzlich erforderlich, die Kathode 7K mit Sauerstoff zu beaufschlagen. Auch hierfür muss also ein gewisser Freiraum geschaffen werden, wenn - wie üblich und bekannt - mehrere Einzel-Brennstoffzellen in Form der gezeigten Kassette 4 übereinander gestapelt sind. Dies kann dadurch erfolgen, dass die Außenseite 3a bzw. in der Figur die Unterseite 3a der Unterschale 3 mit einer entsprechenden, einen solchen Freiraum schaffenden Prägestruktur versehen wird. Alternativ kann - wie figürlich dargestellt - an die Unterseite 3a der Unterschale 3 ein geeignetes Drahtgestrick 9 oder dgl. angebracht (bspw. angelötet) sein. Entweder durch die genannten Einprägungen oder durch dieses Drahtgestrick 9 kann dann Luft-Sauerstoff zur Kathode (7K) einer in einem in **Fig.2** nicht, jeodch in **Fig.1** figürlich dargestellten Brennstoffzellen-Stack unterhalb der figürlich dargestellten Einzel-Brennstoffzelle bzw. Kassette 4 liegenden Einzel-Brennstoffzelle bzw. Kassette gelangen, wobei auch eine Kombination beider Maßnahmen möglich ist.

Bekanntermaßen sollen die in einem Brennstoffzellen-Stack oder -Stapel übereinander angeordneten Einzel-Brennstoffzellen elektrisch gut leitend miteinander verbunden sein, um die ohmschen Verluste in diesem Stack zu minimieren. In diesem Sinne ist das besagte metallische Drahtgestrick 9 auch besonders vorteilhaft. Ebenfalls in diesem Sinne sollten die beiden Kassetten-Schalen, d.h. die Oberschale 1 und die Unterschale 3 ebenfalls elektrisch gut miteinander kontaktiert sein. Dies kann über die bereits genannte Schweißnaht 6 erfolgen, die hierzu in der betroffenen Fläche entlang von Mäandern geführt sein kann, und/oder zusätzlich über elektrisch an der Oberschale 1 und der Unterschale 3 kontaktierte metallische Drahtgestricke, wie das hier im Hohlraum der Kassette 4 vorgesehene Drahtgewirk 5. Diese Kontaktierung kann dabei mittels Widerstandsschweißen (Rollnaht-, Punkt-, Kondensatorentladungs-Schweißen), Laserschweißen, Elektronenstrahlschweißen oder Löten erfolgen. In diesem Zusammenhang nochmals kurz auf **Fig.1** Bezug nehmend, sei darauf hingewiesen, dass ein bzw. das die mehreren übereinander gestapelten Kassetten 4 aufnehmende Gehäuse 10 gegenüber diesen Kassetten 4 elektrisch isoliert sein sollte, um elektrischen Kurzschluss zu vermeiden.

Ein aus derartigen Kassetten 4 bzw. Einzel-Brennstoffzellen zusammengesetzter Brennstoffzellen-Stapel lässt sich äußerst einfach auch für eine Großserie fertigen. Eine vorgeschlagene Kassette zeichnet sich durch relativ geringen Verzug (über den stark variierenden Betriebstemperaturen) aus, womit sich eine Verbesserung der Betriebsbedingungen für die (figürlich nicht dargestellten, in einem Brennstoffzellen-Stack jedoch erforderlichen) Dichtungen ergibt. Die aus der Verwendung der vorgeschlagenen Folie 1 stark verbesserte Ebenheit der Applikationsfläche für die Anoden-Schicht 7A ermöglicht die Umsetzung geringerer Dicken der keramischen Reaktionsschichten (d.h. der Kathoden-Elektrolyt-Anoden-Einheit 7) und damit sowohl einen geringeren Materialverbrauch als auch geringere Reaktionsverluste wegen geringerer Transportwege. Auch bezüglich der Kontaktschicht zur Kathode 7K, die hier durch das Drahtgestrick 9 realisiert wird, ergeben sich dann geringere ohmsche Verluste und geringere Transportwiderstände. Insgesamt können durch eine verbesserte elektrische Quer- und Längsleitung des sog. Substrats, d.h. der Folie 1, die chemischen Prozesse in der Brennstoffzelle verbessert und die ohmschen Verluste in der Kassette 4 verringert werden.

Es sei noch darauf hingewiesen, dass im Bereich der Kathoden-Elektrolyt-Anoden-Einheit 7 ein (transversaler) elektrischer Kontakt der Oberschale 1 mit der Unterschale 3 nicht unbedingt notwendig ist, da der Stromfluss in dieser Einzel-Brennstoffzelle ebenso gut lateral über die Oberschale 1 und die Rand-Schweißnaht 6 zur Unterschale 3 erfolgen kann, so dass das im Hohlraum der Kassette 4 figürlich dargestellte Drahtgewirk 5 ggf. entfallen kann, wie überhaupt eine Vielzahl weiterer Details insbesondere konstruktiver Art durchaus abweichend vom gezeigten Ausführungsbeispiel gestaltet sein kann, ohne den Inhalt der Patentansprüche zu verlassen.

## Patentansprüche

1. Brennstoffzellen-Einheit, die aus mehreren Einzel-Brennstoffzellen zusammengebaut ist, von denen jede neben einer Kathoden-Elektrolyt-Anoden-Einheit (7) eine ein Brenngas über deren erste Elektroden-Oberfläche verteilende und die Kathoden-Elektrolyt-Anoden-Einheit (7) tragende Struktur aufweist, und die weiterhin eine einen Hohlraum aufweisende und durch diesen das Brenngas verteilende Kassette (4) enthält,
**dadurch gekennzeichnet, dass** die Brennstoffzellen-Einheit als Stack ausgebildet und aus mehreren übereinander gestapelten Einzel-Brennstoffzellen zusammengebaut ist, deren die Kathoden-Elektrolyt-Anoden-Einheit (7) tragende Struktur eine perforierte mit Löchern (2) oder Durchtrittsöffnungen versehene Folie (1) ist, die als sog. Oberschale (1) mit einer sog. Unterschale (3) durch eine gasdichte stoffschlüssige Verbindung, insbesondere Schweißverbindung, zu der Kassette (4) zusammengesetzt ist, durch deren Hohlraum das Brenngas zur ersten Elektrode (7A) gelangt,
und dass jede Kassette (4) auf ihrer der Kathoden-Elektrolyt-Anoden-Einheit (7) gegenüberliegenden Seite mit einer Gestaltung zum Verteilen von Luftsauerstoff über der Oberfläche der zweiten Elektrode einer benachbarten Kassette versehen ist, so dass der Stack durch mehrere übereinander angeordnete Kassetten (4) gebildet ist, zwischen denen sich jeweils eine Kathoden-Elektrolyt-Anoden-Einheit (7) sowie die sog. Gestaltung zum Verteilen von Luftsauerstoff über der Oberfläche der zweiten Elektrode (7K) befindet.

2. Brennstoffzellen-Stack nach Anspruch 1,
**dadurch gekennzeichnet, dass** die geeignete Gestaltung zum Verteilen von Luftsauerstoff über der Oberfläche der zweiten Elektrode (7K) durch in eine der Kathoden-Elektrolyt-Einheit (7) gegenüber liegenden Wand der Kassette (4) eingebrachte Kanalstruktur oder/und durch ein auf diese Wand aufgebrachtes metallisches Drahtgewirk (9) oder dgl. gebildet ist.

3. Brennstoffzellen-Stack nach Anspruch 1 oder 2, wobei die einzelnen Kassetten (4) in einem Gehäuse oder dgl. gegeneinander verspannt sind,
**dadurch gekennzeichnet, dass** der Stapel zumindest eine sog. Verspann-Kassette (11) enthält, deren Wandungen undurchlässig ausgebildet sind und die mit einem sich bei Erwärmung relativ stark ausdehnenden Material befüllt ist.

4. Brennstoffzellen-Stack nach Anspruch 3,
**dadurch gekennzeichnet, dass** die Verspann-Kassette (11) hinsichtlich ihrer Abmessungen den anderen, jeweils mit einer Kathoden-Elektrolyt-Anoden-Einheit (7) versehenen Kassetten (4) ähnlich ist.

5. Brennstoffzellen-Stack nach einem der vorangegangenen Ansprüche,
**dadurch gekennzeichnet, dass** der Hohlraum der Kassetten (4) und/oder der Verspann-Kassette (11) mit einem Drahtgewirk (5) oder dgl. befüllt ist.

## Claims

1. A fuel cell unit, which is assembled from a plurality of individual fuel cells, each of which, apart from a cathode-electrolyte-anode unit (7), has a structure which distributes combustible gas over the first electrode surface thereof and carries the cathode-electrolyte-anode unit (7), and which furthermore contains a cassette (4) having a cavity and distributing the combustible gas through said cavity, **characterised in that** the fuel cell unit is configured as a stack and is assembled from a plurality of individual fuel cells stacked one above the other, the structure of which carrying the cathode-electrolyte-anode unit (7) being a perforated film (1) provided with holes (2) or through-openings, which is assembled as a so-called upper shell (1) with a so-called lower shell (3) by means of a gas-tight material-uniting connection, more especially a weld connection, to form the cassette (4), through the cavity of which the combustible gas reaches the first electrode (7A), and **in that** each cassette (4) is provided on its side opposing the cathode-electrolyte-anode unit (7) with a configuration for distributing air oxygen over the surface of the second electrode of an adjacent cassette, so the stack is formed by a plurality of cassettes (4) arranged one above the other, between which, in each case, a cathode-electrolyte-anode unit (7) and the so-called configuration for distributing an oxygen over the surface of the second electrode (7K) are located.

2. A fuel cell stack according to claim 1, **characterised in that** the suitable configuration for distributing air oxygen over the surface of the second electrode (7K) is formed by a channel structure introduced into a wall of the cassette (4) opposing of the cathode-electrolyte unit (7) and/or is formed by a metallic wire knitted fabric (9) or the like applied to this wall.

3. A fuel cell stack according to claim 1 or 2, wherein the individual cassettes (4) are braced against one another in a housing or the like, **characterised in that** the stack contains at least one so-called bracing cassette (11), the walls of which are impermeable and which is filled with a material which expands relatively strongly on heating.

4. A fuel cell stack according to claim 3, **characterised in that** the bracing cassette (11) is similar to the other cassettes (4), which are in each case provided with a cathode-electrolyte-anode unit (7), with respect to its dimensions.

5. A fuel cell stack according to any one of the preceding claims, **characterised in that** the cavity of the cassettes (4) and/or the bracing cassette (11) is filled with a wire knitted fabric (5) or the like.

## Revendications

1. Unité de cellules à combustible, composée de plusieurs cellules à combustible simples, chacune de celles-ci ayant à côté d'une unité cathode/électrolyte/anode (7), une structure porteuse répartissant un gaz combustible sur sa première surface d'électrode et portant l'unité cathode/électrolyte/anode (7), et en outre un caisson (4) avec une cavité pour répartir le gaz combustible,
**caractérisée en ce que**
l'unité de cellules à combustible est réalisée sous la forme d'un empilage composé de plusieurs cellules à combustible, simples, empilées les unes sur les autres, et dont la structure portant l'unité cathode/électrolyte/anode (7) est un film (1) perforé d'orifices (2) ou de passages, et qui en tant que coque supérieure (1) est assemblée à une coque inférieure (3) par une liaison par la matière, étanche aux gaz, notamment une soudure pour former le caisson (4), et le gaz combustible arrive sur la première électrode (7A) par la cavité de ce caisson, et
sur son côté opposé à l'unité cathode/électrolyte/anode (7), chaque cassette (4) a une forme pour répartir de l'oxygène de l'air sur la surface de la seconde électrode d'un caisson voisin de façon à former l'empilage par plusieurs caissons (4) superposés entre lesquels se trouve chaque fois une unité cathode/électrolyte/anode (7), ainsi que la mise en forme pour répartir l'oxygène de l'air à la surface de la seconde électrode (7K).

2. Empilage de cellules à combustible selon la revendication 1,
**caractérisé en ce que**
la forme appropriée pour répartir l'oxygène de l'air sur la surface de la seconde électrode (7K) est réalisée par une structure de canal dans la paroi du caisson (4) en regard de l'unité cathode/électrolyte/anode (7), et/ou par un tricot de fils métalliques (9) appliqué sur cette paroi ou analogue.

3. Empilage de cellules à combustible selon la revendication 1 ou 2, dont les différents caissons (4) sont serrés les uns contre les autres dans un boîtier ou moyen analogue,
**caractérisé en ce que**
l'empilage comporte au moins un caisson de compression (11) dont les parois sont imperméables et qui est remplie d'une matière qui se dilate relativement fortement sous l'effet de son élévation de température.

4. Empilage de cellules à combustible selon la revendication 3,
**caractérisé en ce que**
le caisson de compression (11) a des dimensions analogues à celles des autres caissons (4) munis chacun d'une unité cathode/électrolyte/anode (7).

5. Empilage de cellules à combustible selon l'une des revendications précédentes,
**caractérisé en ce que**
la cavité des caissons (4) et/ou du caisson de compression (11) est remplie d'un tricot de fils métalliques (5) ou un moyen analogue.
